# EUROPÄISCHE PATENTSCHRIFT

(11) **EP 3 130 485 B1**
(45) Veröffentlichungstag und Bekanntmachung des Hinweises auf die Patenterteilung: **18.04.2018**
(21) Anmeldenummer: 15180345.9
(22) Anmeldetag: 10.08.2015
(51) Int. Cl.: B60C 13/00

(54) **FAHRZEUGLUFTREIFEN**
PNEUMATIC TYRE FOR A VEHICLE
PNEUMATIQUE DE VEHICULE

(43) Veröffentlichungstag der Anmeldung: 15.02.2017
(73) Patentinhaber: Continental Reifen Deutschland GmbH, 30165 Hannover (DE)
(72) Erfinder: Bogenschütz, Peter, 30900 Wedemark (DE)
(74) Vertreter: Finger, Karsten

(56) Entgegenhaltungen:
- DE-A1-102008 010 486
- DE-A1-102013 205 445

## Beschreibung

Die Erfindung betrifft einen Fahrzeugluftreifen mit zumindest einem flächigen Element auf zumindest einer Seitenwand, welches sich aus einem dreidimensional strukturierten Muster mit einer Vielzahl von übereinstimmend ausgeführten, regelmäßig angeordneten Vertiefungen zusammensetzt, deren größter Durchmesser ≤ 0,70 mm und deren größte Tiefe ≤ 0,60 mm beträgt.

Ein derartiger Fahrzeugluftreifen ist aus der WO 2014 040967 A1 bekannt. Die Vertiefungen nehmen zumindest 60 % des Musters ein und sind derart angeordnet, dass zumindest fünf Vertiefungen pro Quadratmillimeter des Musters vorgesehen sind. Die Vertiefungen weisen gleich große Durchmesser von 0,03 mm bis 0,5 mm auf. Bei einer Ausführungsform der Erfindung sind die Vertiefungen in Draufsicht kreisförmig ausgeführt, bei einer weiteren Ausführungsform als regelmäßige, unmittelbar aneinander anschließende Sechsecke. Die an der Musteroberfläche kreisförmigen Vertiefungen erstrecken sich bei einer Variante in das Gummimaterial der Seitenwand kegelförmig oder kegelstumpfförmig. Die für alle Vertiefungen eines Musters gleich große maximale Tiefe beträgt zwischen 0,2 mm und 0,6 mm. Werden solche Muster zur Gestaltung von Beschriftungen oder Designelementen auf einem ansonsten glatten Bereich der Seitenwand verwendet, ist der erzielbare Kontrast zur glatten Seitenwandfläche besonders groß, da die Vertiefungen nur einen geringen Anteil des einfallenden Lichtes reflektieren. Weiterhin ist aus der DE 10 2008 010 486 A1 ein Fahrzeugluftreifen mit pyramidenförmigen Vertiefungen in der Seitenwand bekannt. Der Erfindung liegt die Aufgabe zugrunde, den Reflexionsgrad solcher Vertiefungen noch weiter zu reduzieren, um den erzielbaren Kontrast zu erhöhen, vor allem um tiefschwarz erscheinende Beschriftungen oder Designelemente auf einer Reifenseitenwand erstellen zu können.

Gelöst wird die gestellte Aufgabe erfindungsgemäß dadurch, dass die Vertiefungen im Wesentlichen pyramidenförmig mit einer quadratischen, regulären Pyramide als Basisform gestaltet sind und in zueinander senkrecht verlaufenden Reihen angeordnet sind, wobei ihre in Draufsicht auf das Muster entlang von Quadraten verlaufenden äußeren Begrenzungskanten muldenförmig in das Gummimaterial der Seitenwand hinein verlaufen.

Ein Seitenwand-Muster mit derart ausgeführten Vertiefungen mit muldenförmig verlaufenden Begrenzungskanten absorbiert mehr Licht als die in bekannter Weise ausgeführten Vertiefungen, sodass der Kontrast der aus einem solchen Muster bestehenden Seitenwandbeschriftungen oder Seitenwanddesigns gegenüber der umgebenden glatten Seitenwandfläche erhöht ist.

Eine Anzahl vorteilhafter Ausgestaltungen des erfindungsgemäßen Musters gestattet es, Einfluss auf die erwünschte Kontrastwirkung der mit erfindungsgemäß strukturierten Mustern versehenen flächigen Elementen auf der Seitenwand eines Fahrzeugluftreifens zu nehmen. Insbesondere kann die Mustergestaltung auf die Ausgestaltung der flächigen Elemente abgestimmt werden.

Bei einer dieser bevorzugten Maßnahmen beträgt die größte Tiefe der muldenförmig verlaufenden Begrenzungskanten höchstens die Hälfte der maximalen Tiefe der Vertiefungen. Diese Maßnahme beeinflusst das Ausmaß der Absorption von einfallendem Licht.

Die muldenförmig verlaufenden Begrenzungskanten können bei bevorzugten Ausführungsformen entweder bogenförmig gekrümmt oder flach V-förmig verlaufen.

Besonders bevorzugt sind ferner Ausführungsformen des Musters, bei welchem zwischen benachbarten Vertiefungen schmale, 0,01 mm bis 0,04 mm breite, analog zu den Begrenzungskanten muldenförmig verlaufende Stege vorhanden sind.

Eine besonders hohe Lichtreflexion wird bei einer Ausführungsvariante erreicht, bei der die flach V-förmig verlaufenden Begrenzungskanten und die gegebenenfalls zwischen den Begrenzungskanten vorhandenen Stege bis zu ihrer tiefsten Stelle treppenförmig gestaltet sind, wobei insbesondere auch die die Vertiefungen begrenzenden Wände treppenförmig mit den in Draufsicht quadratisch verlaufenden Stufenflächen ausgebildet sind. Dabei beträgt die Anzahl der Stufen der treppenförmig verlaufenden Stege und der Wände, jeweils bis zu deren tiefsten Stelle, drei bis fünf. Die treppenförmige Ausgestaltung ist mit freiem Auge nicht erkennbar und verleiht den betreffenden Flächen im Muster eine Rauigkeit, die zu einer besonders effektiven Absorption von Licht beiträgt.

Besonders bevorzugt ist ferner eine Ausführung des Musters, bei der sich der tiefste Punkt der Vertiefungen, in radialer Richtung und von jener Ebene gemessen, in welcher die Ecken der Begrenzungskanten liegen, in einer Tiefe von 0,02 mm bis 0,20 mm, insbesondere von 0,08 mm bis 0,19 mm, befindet.

Der radiale Abstand des tiefsten Punktes der Begrenzungskanten von der Ebene, in welcher die Ecken der Begrenzungskanten liegen, beträgt 0,01 mm bis 0,10 mm, vorzugsweise 0,01 mm bis 0,03 mm. Besonders vorteilhaft für die erzielbare Lichtabsorption ist es ferner, wenn die in Draufsicht auf das Muster vorliegende Erstreckungslänge der Begrenzungskanten 0,02 mm bis 0,50 mm, vorzugsweise 0,10 mm bis 0,30 mm, insbesondere 0,18 mm, beträgt.

Weitere Merkmale, Vorteile und Einzelheiten der Erfindung werden nun anhand der Zeichnung, die Ausführungsbeispiele darstellt, näher beschrieben. Dabei zeigen
Fig. 1 eine Schrägansicht eines Abschnittes eines Fahrzeugluftreifens,
Fig. 2 eine Schrägansicht eines Ausschnittes einer Ausführungsform eines dreidimensional strukturierten Musters,
Fig. 3 eine Draufsicht auf den Ausschnitt des Musters aus Fig. 2,
Fig. 4 eine Schnittdarstellung entlang der Linie IV-IV der Fig. 3,
Fig. 5 eine Draufsicht auf einen Ausschnitt einer weiteren Ausführungsform eines dreidimensional strukturierten Musters und
Fig. 6 eine Schnittdarstellung entlang der Linie VI-VI der Fig. 5.

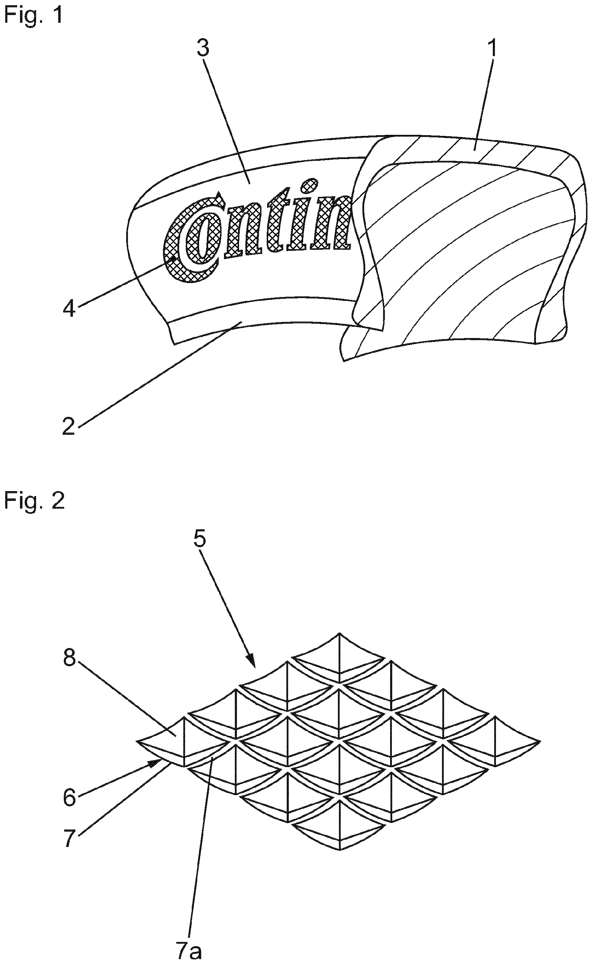

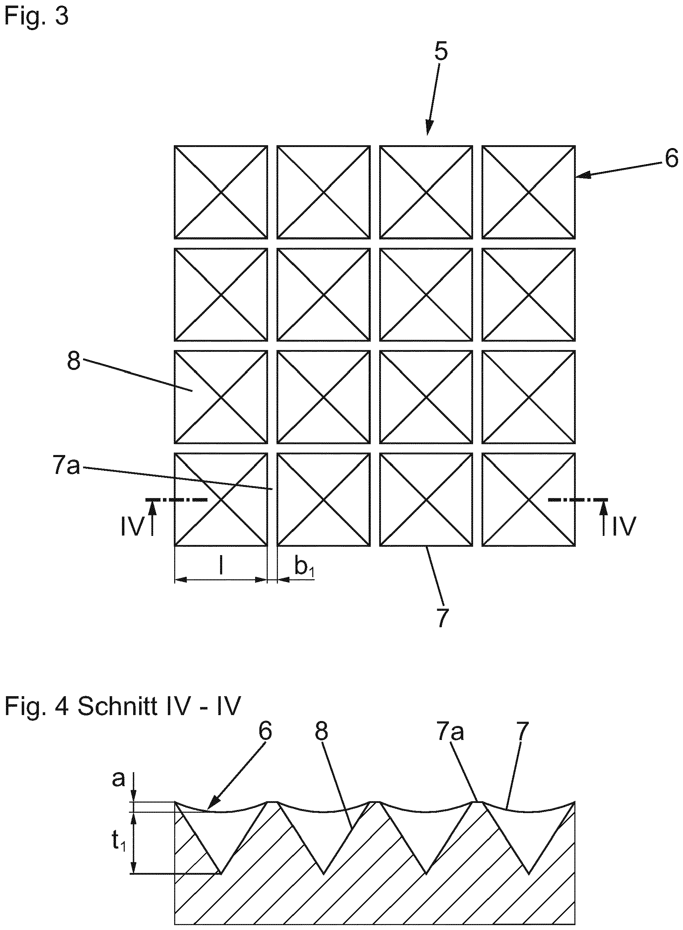

Der in Fig. 1 gezeigte Fahrzeugluftreifen weist einen Laufstreifen 1, Wulstbereiche 2 und Seitenwände 3 auf. Auf zumindest einer Seitenwand 3 sind, vorzugsweise in einem mit glatter Oberfläche versehenen Bereich, Flächenelemente, beispielsweise Buchstaben eines Schriftzuges oder dekorative Elemente, ausgebildet, die aus einem dreidimensional strukturierten Muster gemäß der Erfindung gebildet sind. In Fig. 1 ist ein Ausschnitt 4 des Musters angedeutet, von welchem zwei Ausführungsvarianten anhand der Figuren 2 bis 6 näher erläutert werden.

Fig. 2 bis 4 zeigen somit stark vergrößert den Ausschnitt 4 mit einer Ausführungsform eines Musters 5, welches eine Vielzahl von Vertiefungen 6 aufweist. Die Vertiefungen 6 weisen im Wesentlichen die Form von regulären quadratischen Pyramiden auf, sind sämtlich übereinstimmend ausgeführt und in zwei zueinander senkrecht verlaufenden Reihen angeordnet. Der gezeigte quadratische Ausschnitt 4 umfasst vier waagrechte und vier senkrechte Reihen von Vertiefungen 6, daher insgesamt sechzehn Vertiefungen 6. Jede Vertiefung 6 ist an der Außenseite des Musters von entlang der Seiten eines Quadrates verlaufenden Begrenzungskanten 7 begrenzt, deren in Draufsicht ermittelte Erstreckungslänge 10,02 mm bis 0,50 mm, vorzugswese 0,10 mm bis 0,30 mm, insbesondere 0,18 mm, beträgt. Der gegenseitige Abstand b₁ zwischen den parallel zueinander verlaufenden Begrenzungskanten 7 benachbarter Vertiefungen 6 beträgt 0,01 mm bis 0,04 mm. Die Begrenzungskanten 7 und die schmalen Stege 7a zwischen den Vertiefungen 6 verlaufen muldenförmig nach innen Richtung Vertiefungsinneres, vorzugsweise konkav gekrümmt. Der tiefste Punkt jeder Begrenzungskante 7 befindet sich in ihrer Mitte, wobei der Abstand a des tiefsten Punktes von der Ebene, in welcher die Ecken der Begrenzungskanten liegen, in radialer Richtung 0,01 mm bis 0,10 mm, vorzugsweise 0,01 mm bis 0,03 mm, beträgt. An die Kanten 7 schließen die in radialer Richtung bis zur Pyramidenspitze am tiefsten Punkt der Vertiefungen 6 verlaufenden, jeweils die Seitenflächen der Pyramiden bildenden dreieckigen Begrenzungswände 8 an.

Der tiefste Punkt der Vertiefungen 6 befindet sich in radialer Richtung, gemessen von der Ebene, in welcher die Ecken der Begrenzungskanten liegen, in einer Tiefe t₁ von 0,02 mm bis 0,20 mm, insbesondere von 0,08 mm bis 0,19 mm, wobei t₁ zumindest des Zweifache des Abstandes a ist. Die Vertiefungen 6 nehmen zumindest 80 % der Fläche des Musters 5 ein. Entsprechend gering ist die Größe der Zwischenflächen. Bei einer gesondert nicht dargestellten Ausführungsform können die Vertiefungen 6 unmittelbar aneinander anschließen, sodass bei benachbarten Vertiefungen 6 Begrenzungskanten 7 jeweils zwei Vertiefungen 6 begrenzen.

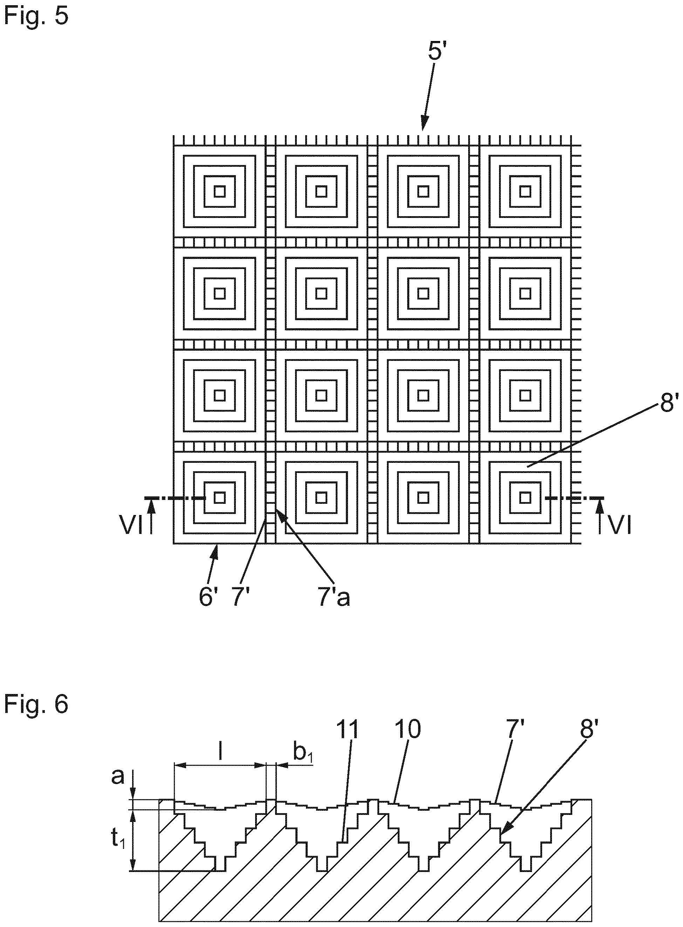

Fig. 5 und 6 zeigen einen quadratischen Ausschnitt einer weiteren Ausführungsform eines Musters 5' mit gleich ausgeführten, in zueinander senkrecht verlaufenden Reihen angeordneten Vertiefungen 6', die ebenfalls grundsätzlich pyramidenförmig mit regulären quadratischen Pyramiden als Basisform ausgebildet sind. An der Außenseite des Musters 5' verlaufen die Begrenzungskanten 7' der Vertiefungen 6' in Draufsicht entlang von Quadraten, ähnlich zur ersten Ausführungsform, jedoch ebenso wie die Stege 7'a zwischen den Kanten 7' benachbarter Vertiefungen 6' muldenförmig nach innen, Richtung Inneres der Vertiefungen 6'. Die Stege 7'a weisen einen treppenförmigen Verlauf bis zu ihrer tiefsten Stelle in ihrer Mitte auf, deren Abstand a vom Niveau der Ecken der Kanten 7' dem oben erwähnten Abstand a entspricht. Die Anzahl der Treppenstufen 10 an jeder Seite der tiefsten Stelle beträgt zwischen drei und fünf, bei der gezeigten Ausführung sind vier Stufen 10 vorgesehen. Bis zur tiefsten Stelle jeder Vertiefung 6', die sich in radialer Richtung in der oben erwähnten Tiefe t₁ befindet, sind auch die vier Wände 8' der Vertiefungen 6' treppenförmig gestaltet und mit in Draufsicht quadratisch umlaufenden Stufenflächen gebildet, die von Stufe 11 zu Stufe 11 schrittweise kleiner werden. An der tiefsten Stelle der Vertiefung 6' befindet sich ein winziges Quadrat. Die Anzahl der Stufen 11 - ohne Berücksichtigung der tiefsten Stelle - beträgt insbesondere in Übereinstimmung mit der Anzahl der Stufen 10 in den Stegen 7'a zwischen drei und fünf, insbesondere vier. Die Stufen 10, 11 weisen insbesondere gleich große Stufenhöhen und gleich breite Stufenflächen auf. Durch die winzigen Stufen 10, 11 wird den betreffenden Flächen eine Rauigkeit verliehen, die zu einer besondere effektiven Absorption von Licht beiträgt.

Die erfindungsgemäße Ausgestaltung der Vertiefungen 6, 6', insbesondere der muldenförmig in Richtung Vertiefungsinneres verlaufenden Begrenzungskanten 7, 7' an der Musteraußenfläche, reduziert die Reflexion von Licht auf einen sehr kleinen Anteil. Mit derartigen Mustern 5, 5' überzogene Flächenelemente in der Seitenwand 3 von Reifen erscheinen daher im Vergleich zur umgebenden Seitenwandfläche als tiefschwarz. Infolge ihrer sehr kleinen Abmessungen sind die einzelnen Vertiefungen 6, 6', aus welchen die Muster 5, 5' zusammengesetzt sind, mit freiem Auge nicht erkennbar.

Zur Herstellung erfindungsgemäßer Muster 5, 5' werden entsprechend feine Strukturen mittels Lasergravur in die die Seitenwände ausformenden Seitenschalen einer Reifenheizform eingebracht. Zur Herstellung des Musters 5' arbeitet sich der Laser entsprechend gesteuert gemäß einer Graustufen-Bitmap Schicht für Schicht in das Material der Seitenschalen.

### Bezugsziffernliste

- 1: Laufstreifen
- 2: Wulstbereich
- 3: Seitenwand
- 4: Ausschnitt
- 5, 5': Muster
- 6, 6': Vertiefung
- 7, 7': Begrenzungskante
- 7a, 7'a: Steg
- 8, 8`: Begrenzungswand
- 10, 11: Stufe
- a: Abstand
- 1: Erstreckungslänge
- t₁: Tiefe

## Patentansprüche

1. Fahrzeugluftreifen mit zumindest einem flächigen Element auf zumindest einer Seitenwand (3), welches sich aus einem dreidimensional strukturierten Muster (5, 5') mit einer Vielzahl von übereinstimmend ausgeführten, regelmäßig angeordneten Vertiefungen (6, 6') zusammensetzt, deren größter Durchmesser ≤ 0,70 mm und deren größte Tiefe ≤ 0,60 mm beträgt, wobei
die Vertiefungen (6, 6') im Wesentlichen pyramidenförmig jeweils mit einer quadratischen, regulären Pyramide als Basisform gestaltet sind und in zueinander senkrecht verlaufenden Reihen angeordnet sind, **dadurch gekennzeichnet, dass** die in Draufsicht auf das Muster (5, 5') entlang von Quadraten verlaufenden äußeren Begrenzungskanten (7, 7') der Vertiefungen (6, 6') muldenförmig in das Gummimaterial der Seitenwand (3) hinein verlaufen.

2. Fahrzeugluftreifen nach Anspruch 1, **dadurch gekennzeichnet, dass** die größte Tiefe der muldenförmig verlaufenden Begrenzungskanten (7, 7') höchstens der Hälfte der maximalen Tiefe der Vertiefungen (6, 6') beträgt.

3. Fahrzeugluftreifen nach Anspruch 1 oder 2, **dadurch gekennzeichnet, dass** die Begrenzungskanten (7) bogenförmig gekrümmt verlaufen.

4. Fahrzeugluftreifen nach Anspruch 1 oder 2, **dadurch gekennzeichnet, dass** die Begrenzungskanten (7') flach V-förmig verlaufen.

5. Fahrzeugluftreifen nach einem der Ansprüche 1 bis 4, **dadurch gekennzeichnet, dass** zwischen benachbarten Vertiefungen (6, 6') schmale, 0,01 mm bis 0,04 mm breite, analog zu den Begrenzungskanten (7, 7') muldenförmig verlaufende Stege (7a, 7'a) vorhanden sind.

6. Fahrzeugluftreifen nach einem der Ansprüche 4 bis 5, **dadurch gekennzeichnet, dass** die flach V-förmig verlaufenden Begrenzungskanten (7') bis zu ihrer tiefsten Stelle treppenförmig gestaltet sind.

7. Fahrzeugluftreifen nach einem der Ansprüche 5 bis 6, **dadurch gekennzeichnet, dass** die die Stege (7'a) bis zu ihrer tiefsten Stelle treppenförmig gestaltet sind.

8. Fahrzeugluftreifen nach einem der Ansprüche 1 bis 7, **dadurch gekennzeichnet, dass** die die Vertiefungen (6') begrenzenden Wände (8) treppenförmig mit in Draufsicht quadratisch verlaufenden Stufenflächen ausgebildet sind.

9. Fahrzeugluftreifen nach einem der Ansprüche 6 bis 8, **dadurch gekennzeichnet, dass** die Anzahl der Stufen (10, 11) der treppenförmig verlaufenden Stege (7'a) und Wände (8'), jeweils bis zur tiefsten Stelle, drei bis fünf beträgt.

10. Fahrzeugluftreifen nach einem der Ansprüche 1 bis 9, **dadurch gekennzeichnet, dass** sich der tiefste Punkt der Vertiefungen (6, 6') von jener Ebene gemessen, in welcher die Ecken der Begrenzungskanten (7, 7') liegen, in einer Tiefe (t₁) von 0,02 mm bis 0,20 mm, insbesondere von 0,08 mm bis 0,19 mm, befindet.

11. Fahrzeugluftreifen nach einem der Ansprüche 1 bis 10, **dadurch gekennzeichnet, dass** der Abstand (a) des tiefsten Punktes der Begrenzungskanten (7, 7') von der Ebene, in welcher die Ecken der Begrenzungskanten (7, 7') liegen, 0,01 mm bis 0,10 mm, vorzugsweise 0,01 mm bis 0,03 mm, beträgt.

12. Fahrzeugluftreifen nach einem der Ansprüche 1 bis 11, **dadurch gekennzeichnet, dass** die in Draufsicht auf das Muster (5, 5') vorliegende Erstreckungslänge (1) der Begrenzungskanten (7, 7') 0,02 mm bis 0,50 mm, vorzugsweise 0,10 mm bis 0,30 mm, insbesondere 0,18 mm, beträgt.

## Claims

1. Pneumatic vehicle tire comprising at least one planar element on at least one sidewall (3), which element consists of a three-dimensionally structured pattern (5, 5') with a multiplicity of identically designed, regularly arranged depressions (6, 6'), the greatest diameter of which is ≤ 0.70 mm and the greatest depth of which is ≤ 0.60 mm,
wherein
the depressions (6, 6') are created as substantially pyramidal, in each case with a square, regular pyramid as the basic form, and are arranged in rows running perpendicularly to one another, **characterized in that** the outer delimiting edges (7, 7') of the depressions (6, 6'), which extend along squares in plan view of the pattern (5, 5'), run into the rubber material of the sidewall (3) in the form of recesses.

2. Pneumatic vehicle tire according to Claim 1, **characterized in that** the greatest depth of the delimiting edges (7, 7') running in the form of recesses is at most half the maximum depth of the depressions (6, 6').

3. Pneumatic vehicle tire according to Claim 1 or 2, **characterized in that** the delimiting edges (7) run in an arcuately curved manner.

4. Pneumatic vehicle tire according to Claim 1 or 2, **characterized in that** the delimiting edges (7) run is a shallow V-shaped manner.

5. Pneumatic vehicle tire according to one of Claims 1 to 4, **characterized in that** there are between adjacent depressions (6, 6') narrow webs (7a, 7'a), 0.01 mm to 0.04 mm wide, running in the form of recesses in a way analogous to the delimiting edges (7, 7').

6. Pneumatic vehicle tire according to one of Claims 4 to 5, **characterized in that** the delimiting edges (7') that run in a shallow V-shaped manner are created in the form of a series of steps down to their lowest point.

7. Pneumatic vehicle tire according to one of Claims 5 to 6, **characterized in that** the webs (7'a) are created in the form of a series of steps down to their lowest point.

8. Pneumatic vehicle tire according to one of Claims 1 to 7, **characterized in that** the walls (8) that delimit the depressions (6') are formed as a series of steps, with surfaces of the steps extending in a square manner in plan view.

9. Pneumatic vehicle tire according to one of Claims 6 to 8, **characterized in that** the number of steps (10, 11) of the webs (7'a) and walls (8') running in the form of a series of steps, in each case down to the lowest point, is three to five.

10. Pneumatic vehicle tire according to one of Claims 1 to 9, **characterized in that** the lowest point of the depressions (6, 6'), measured from that plane in which the corners of the delimiting edges (7, 7') lie, is at a depth (t1) of 0.02 mm to 0.20 mm, in particular of 0.08 mm to 0.19 mm.

11. Pneumatic vehicle tire according to one of Claims 1 to 10, **characterized in that** the distance (a) of the lowest point of the delimiting edges (7, 7') from the plane in which the corners of the delimiting edges (7, 7') lie is 0.01 mm to 0.10 mm, preferably 0.01 mm to 0.03 mm.

12. Pneumatic vehicle tire according to one of Claims 1 to 11, **characterized in that** the length of the extent (1) of the delimiting edges (7, 7') in plan view of the pattern (5, 5') is 0.02 mm to 0.50 mm, preferably 0.10 mm to 0.30 mm, in particular 0.18 mm.

## Revendications

1. Bandage pneumatique pour roue de véhicule présentant au moins un élément plat situé sur au moins une paroi latérale (3) et constitué de l'assemblage d'un motif (5, 5') structuré en trois dimensions présentant plusieurs creux (6, 6') mutuellement correspondants et disposés régulièrement, dont le plus grand diamètre est ≤ 0,70 mm et dont la plus grande profondeur est ≤ 0,60 mm,
les creux (6, 6') présentant essentiellement la forme de pyramides régulières à base carrée et étant disposés en rangées s'étendant perpendiculairement les unes aux autres,
**caractérisé en ce que**
les arêtes extérieures (7, 7') des creux (6, 6') qui s'étendent le long des carrés dans une vue en plan du motif (5, 5') pénètrent en forme de sillon dans le matériau de caoutchouc de la paroi latérale (3).

2. Bandage pneumatique pour roue de véhicule selon la revendication 1, **caractérisé en ce que** la plus grande profondeur des bordures frontières (7, 7') en forme de sillon représente au plus la moitié de la profondeur maximale des creux (6, 6').

3. Bandage pneumatique pour roue de véhicule selon les revendications 1 ou 2, **caractérisé en ce que** les bords frontières (7) sont courbés en arc de cercle.

4. Bandage pneumatique pour roue de véhicule selon les revendications 1 ou 2, **caractérisé en ce que** les bords frontières (7) s'étendent en forme de V aplati.

5. Bandage pneumatique pour roue de véhicule selon l'une des revendications 1 à 4, **caractérisé en ce que** d'étroites nervures (7a, 7'a) en forme de sillon, d'une largeur de 0,01 mm à 0,04 mm et analogues aux bords frontières (7, 7') sont prévues entre deux creux (6, 6') voisins.

6. Bandage pneumatique pour roue de véhicule selon l'une des revendications 4 et 5, **caractérisé en ce que** les bords frontières (7') s'étendant en forme de V aplati ont la forme d'un escalier jusqu'à leur emplacement le plus profond.

7. Bandage pneumatique pour roue de véhicule selon l'une des revendications 5 à 6, **caractérisé en ce que** les traverses (7'a) ont la forme d'un escalier jusqu'à leur emplacement le plus profond.

8. Bandage pneumatique pour roue de véhicule selon l'une des revendications 1 à 7, **caractérisé en ce que** les parois (8) délimitant les creux (6') ont la forme d'un escalier dont la surface des marches s'étend en carré dans une vue en plan.

9. Bandage pneumatique pour roue de véhicule selon l'une des revendications 6 à 8, **caractérisé en ce que** le nombre de marches (10, 11) des traverses (7'a) et des parois (8') s'étendant en escalier jusqu'à leur emplacement le plus profond est de 3 à 5.

10. Bandage pneumatique pour roue de véhicule selon l'une des revendications 1 à 9, **caractérisé en ce que** le point le plus profond des creux (6, 6'), mesuré depuis le plan dans lequel sont situés les sommets de bords frontières (7, 7'), est situé à une profondeur (t₁) de 0,02 mm à 0,20 mm et en particulier de 0,08 mm à 0,19 mm.

11. Bandage pneumatique pour roue de véhicule selon l'une des revendications 1 à 10, **caractérisé en ce que** la distance (a) entre le point le plus profond des bords frontières (7, 7') et le plan dans lequel les sommets des bords frontières (7, 7') sont situés est de 0,01 m à 0,10 mm et de préférence de 0,01 mm à 0,03 mm.

12. Bandage pneumatique pour roue de véhicule selon l'une des revendications 1 à 11, **caractérisé en ce que** dans une vue en plan, la longueur (l) de l'extension des bords frontières (7, 7') présents sur le motif (5, 5') est de 0,02 mm à 0,50 mm, de préférence de 0,10 mm à 0,30 mm et en particulier de 0,18 mm.
